Europäisches Patentamt

European Patent Office

Office européen des brevets

(19)

(11) Numéro de publication: **0 120 779**
**B1**

(12) **FASCICULE DE BREVET EUROPEEN**

(45) Date de publication du fascicule du brevet:
28.10.87

(21) Numéro de dépôt: **84400580.1**

(22) Date de dépôt: **22.03.84**

(51) Int. Cl.⁴: **F 16 D 25/11, B 60 K 41/02**

(54) Commande de la pression d'alimentation d'un récepteur hydraulique.

(30) Priorité: **22.03.83 FR 8304636**

(43) Date de publication de la demande:
**03.10.84 Bulletin 84/40**

(45) Mention de la délivrance du brevet:
**28.10.87 Bulletin 87/44**

(84) Etats contractants désignés:
**BE DE GB IT NL SE**

(56) Documents cités:
**EP - A - 0 062 458**
**FR - A - 1 234 304**
**FR - A - 2 017 651**
**FR - A - 2 233 893**
**FR - A - 2 292 895**
**FR - A - 2 402 128**
**GB - A - 2 042 658**
**US - A - 3 765 271**
**US - A - 4 282 947**

(73) Titulaire: **REGIE NATIONALE DES USINES RENAULT,**
**Boite postale 103 8-10 avenue Emile Zola,**
**F-92109 Boulogne-Billancourt (FR)**

(72) Inventeur: **Leorat, François, Boulevard de la Reine,**
**F-78000 Versailles (FR)**

(74) Mandataire: **Chassagnon, Jean-Alain et al, REGIE**
**NATIONALE DES USINES RENAULT (S.0804),**
**F-92109 Boulogne-Billancourt Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit
être formée par écrit et motivée. Elle n'est réputée formée qu'après paiement de la taxe d'opposition (Art. 99(1) Convention sur le
brevet européen).

## Description

La présente invention se rapporte à une commande de la pression d'alimentation d'un récepteur hydraulique, notamment pour un embrayage de boîte de vitesses automatique de véhicule automobile.

De manière classique, les transmissions automatiques conventionnelles équipées d'un coupleur ou d'un convertisseur de couple sont conçues de telle sorte que, un rapport de marche avant (ou de marche arrière) étant engagé, moteur tournant, la transmission de couple du moteur aux roues n'est pas interrompue même à l'arrêt du véhicule; il en résulte un certain nombre de conséquences dont certaines peuvent être classées au nombre des avantages de ce type de transmissions, d'autres pouvant au contraire être considérées comme des inconvénients, certains avantages pouvant d'ailleurs se transformer en inconvénients au gré des circonstances de conduite et inversement.

Cette non interruption du couple entre moteur et roue se traduit, véhicule à l'arrêt moteur au ralenti, par un couple de trainée plus ou moins important selon les caractéristiques du moteur et de l'organe de couplage (convertisseur ou coupleur), qui communique au véhicule une tendance spontanée à «ramper». Cette tendance à ramper peut être considérée comme favorable dans la mesure où:

- elle permet des évolutions douces et précises du véhicule à très basse vitesse (manœuvres de parking par exemple);
- elle empêche un recul du véhicule lors des démarrages en côte modérée.

Elle constitue par contre un inconvénient indéniable dans la mesure où:

- elle contraint à maintenir continuellement le pied sur le frein pour conserver l'immobilité du véhicule après un arrêt sur route plate;
- elle oblige à régler le régime de ralenti du moteur à un niveau supérieur à ce qui serait nécessaire à un véritable «point mort», ce qui, en circulation urbaine, induit une surconsommation non négligeable à chaque arrêt du véhicule aussi bien en moteur à essence qu'en moteur Diesel;
- la non-interruption du couple entre moteur et roues implique la mise sous tension mécanique de toute la chaîne cinématique correspondante, soumise aux sollicitations vibratoires issues du moteur: il en résulte souvent des trépidations inacceptables au niveau de l'habitacle, le plus souvent pour des véhicules équipés d'un moteur Diesel.

Face à ces phénomènes, on ressent donc le besoin d'un dispositif enclenchable à volonté par le conducteur, dispositif qui «débraye» automatiquement la transmission à chaque arrêt du véhicule et la «réembraye» avec une progressivité convenable à chaque redémarrage. On connaît des dispositifs de conception simple qui assurent correctement la fonction de débrayage de la transmission à l'arrêt en coupant l'alimentation en huile du vérin qui assure le serrage de l'élément de friction d'entrée de la transmission; mais ces dispositifs, comme celui décrit dans le document EP-A-62 458, ne prennent pas en compte les divers paramètres de vitesse (moteur, turbine de l'organe de couplage): il en résulte des effets de roue libre plus ou moins désirables et de toutes façons incontrôlés, ainsi qu'une progressivité nettement insuffisante à la remise sous couple. En effet, au réembrayage au moment où le conducteur réappuie sur l'accélérateur, le vérin est réalimenté sous pression sans précaution particulière et sans relation avec l'évolution de la vitesse du moteur, si bien que la prise de couple peut être brutale, prématurée ou tardive (emballement du moteur).

La présente invention permet de remédier aux inconvénients précités des systèmes connus de «débrayage à l'arrêt» des transmissions automatiques, en réalisant un asservissement systématique de la capacité de serrage du vérin de l'organe d'entrée de la transmission aux conditions instantanées de vitesse du moteur, de la turbine de l'organe de couplage et du véhicule. La présente invention s'intègre de manière particulièrement avantageuse aux systèmes électroniques ou à microprocesseur de contrôle/commande de transmission, mais elle peut être associée à tout autre type de système de contrôle.

A cet effet, la commande de la pression d'alimentation d'un récepteur hydraulique selon l'invention comprend un modulateur de pression du type fermé par défaut de courant associé à un ensemble de commandes; lequel ensemble de commandes peut être autorisé à fonctionner par un moyen extérieur et reçoit les informations vitesse moteur $\omega_m$, vitesse turbine $\omega_T$, charge moteur $\alpha_c$ et vitesse véhicule $V_v$.

La commande de la pression d'un récepteur hydraulique comporte la mesure d'un glissement $\Delta\omega = \omega_m - \omega_T$ qui est utilisée pour synthétiser le signal de commande d'un modulateur de pression de façon à positionner le vérin du récepteur hydraulique aux environs immédiats de la course d'accostage des garnitures.

Ce pilotage de la pression n'est possible que lorsque les grandeurs $\alpha_c$ et $V_v$ sont simultanément inférieures à des seuils respectifs de valeurs préétablies.

Selon un mode de réalisation préféré de l'invention, la commande de la pression d'alimentation d'un récepteur hydraulique consiste à comparer le glissement $\Delta\omega$ séquentiellement à deux valeurs de seuil, $\delta\omega$ et $\varepsilon$:

- Si $\Delta\omega_1 = \delta\omega - \Delta\omega$ est négatif, il y a génération d'un signal de correction à grand gain $\delta = \delta (\Delta\omega_1)$, modifiant le signal de commande du modulateur de pression.
- Si $\Delta\omega_1 = \delta\omega - \Delta\omega$ est positif, il y a comparaison avec une deuxième valeur de seuil $\varepsilon$ inférieure à $\delta\omega$, et génération d'un signal de correction à petit gain $\delta = \delta (\Delta\omega_2)$, où $\Delta\omega_2 = \varepsilon - \Delta\omega$.

– Si $\Delta\omega<\varepsilon$, le signal de correction $\delta$ est pris égal à 0.

Le signal de correction $\delta$ agit sur un dispositif d'incrémentation du signal de commande du modulateur de pression .

Selon un mode de réalisation préféré de l'invention, la commande de la pression d'alimentation d'un récepteur hydraulique consiste de plus en ce que le temps d'activation du dispositif est compté et comparé à une valeur de seuil de temps prédéterminée $t_{max}$. Quand le temps écoulé dépasse $t_{max}$:

– si le premier seuil n'est pas franchi, c'est-à-dire si $\Delta\omega>\delta\omega$, il y a déclenchement d'un signal d'alarme et réalimentation à la pleine pression du récepteur hydraulique;
– si le glissement $\Delta\omega$ est compris entre le premier et le second seuil, c'est-à-dire si $\varepsilon<\Delta\omega<\delta\omega$, le dispositif selon l'invention arrête l'incrémentation du signal de commande du modulateur et incrémente le deuxième seuil jusqu'à une valeur de troisième seuil $\delta\omega_1$, intermédiaire entre le premier et le deuxième seuil;
– le glissement $\Delta\omega>\delta\omega_1$, il y a déclenchement d'un signal d'alarme et réalimentation à la pleine pression du récepteur hydraulique;
– si le glissement $\Delta\omega<\delta\omega_1$, cette valeur du glissement devient le nouveau deuxième seuil, et le temps t est réinitialisé à zéro.

Selon un mode de réalisation préféré de l'invention, la commande de la pression d'alimentation d'un récepteur hydraulique consiste de plus en ce que, à la disparition de l'ordre de débrayage à l'arrêt, le retour à la pleine pression d'alimentation s'effectue selon une loi prédéterminée en fonction du temps.

On décrira maintenant un mode de réalisation non limitatif de l'invention en se référant aux dessins annexés parmi lesquels:

la fig. 1 représente la caractéristique pression/course du vérin de l'organe d'entrée de la transmission;

la fig. 2 représente l'évolution du glissement de l'organe de couplage en fonction de la course du vérin de l'organe d'entrée, véhicule arrêté moteur tournant au ralenti, rapport engagé;

la fig. 3 représente la caractéristique de l'électrovanne modulant la pression d'alimentation du vérin;

la fig. 4 représente le schéma électrique fonctionnel d'un mode de réalisation de l'invention;

la fig. 5 représente le schéma de principe de l'alimentation du vérin par l'électrovanne modulatrice.

Le dispositif objet de l'invention peut indifféremment être automatiquement mis en service quand certains paramètres de conduite se trouvent réunis, ou bien à la demande du conducteur et quand ces mêmes paramètres sont présents.

D'une manière non limitative, on peut envisager que le dispositif soit mis en action si, de manière simultanée:

– la vitesse du véhicule $V_v$ s'abaisse en dessous d'une valeur de seuil $V_{lim}$;
– la position de l'organe de réglage de l'arrivée de combustible au moteur est celle correspondant au ralenti: on notera cette position $\alpha_c = 0$.

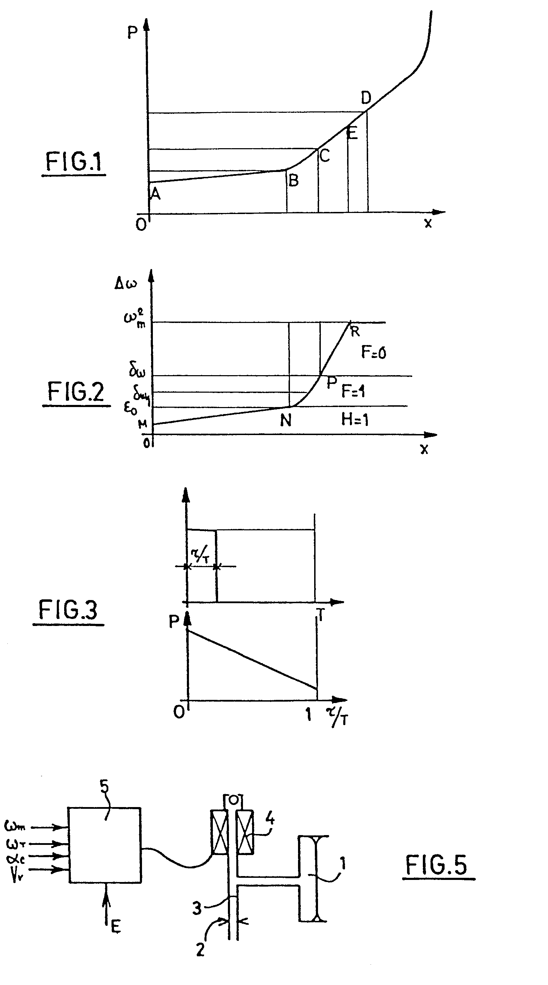

Si l'on choisit $V_{lim} \simeq 0$, on obtient un débrayage à l'arrêt sans effet de roue libre notable, effet que l'on peut obtenir au contraire en choisissant pour $V_{lim}$ une valeur non nulle considérée comme souhaitable. Le principe de l'invention prend en compte les caractéristiques d'action d'un vérin usuel assurant le serrage de l'organe d'entrée d'une transmission automatique. La fig. 1 représente la caractéristique pression/course d'un tel vérin: le segment AB de cette caractéristique représente la course morte durant laquelle l'organe d'entrée ne transmet aucun couple appréciable autre que le couple résiduel de trainée des garnitures de friction, tandis que le couple transmissible croît linéairement avec la pression d'alimentation du vérin le long de la portion BD de cette caractéristique. Le point D correspond à la position d'équilibre du vérin pour la pleine pression d'alimentation, moteur au ralenti, rapport engagé. Au fur et à mesure que la pression monte dans le vérin et que le couple transmissible $C_T$ augmente, la différence de vitesse $\Delta\omega = \omega_m-\omega_T$ entre l'impulseur et la turbine de l'organe de couplage augmente corrélativement avec $C_T$ selon la courbe de la fig. 2 sur laquelle:

– le point M correspond au glissement $\Delta\omega$ résiduel, vérin totalement desserré;
– le point N correspond au glissement $\Delta\omega$ au moment de l'accostage des garnitures de friction;
– le point R correspond à $\omega_T = 0$, soit $\Delta\omega = \omega^R_m$ vitesse du moteur au ralenti: à partir de ce point, le vérin est suffisamment serré pour permettre la transmission du couple $C_T$ sans glissement de l'organe de friction.

Le but de l'invention est de permettre, en phase «débrayée à l'arrêt», de positionner le vérin au point B de sa caractéristique – et non au point A ainsi qu'il est couramment réalisé au moyen des dispositifs connus – en asservissant la position du vérin en B à la valeur du glissement $\Delta\omega$ en N: ce positionnement du vérin au point B, permet d'éviter, lorsque disparaît l'ordre de débrayage à l'arrêt ($\alpha_c \neq 0$ par exemple), d'avoir à parcourir toute la course morte AB du vérin, course pendant la durée de laquelle, aucun couple ne pouvant être transmis, la vitesse moteur $\omega_m$ peut s'accélérer sans contrôle. Or, pour rattraper le «temps perdu» pendant la course morte AB, on est contraint d'opérer ensuite une prise de couple énergique sur l'organe de friction, communiquant ainsi un à-coup peu agréable au véhicule.

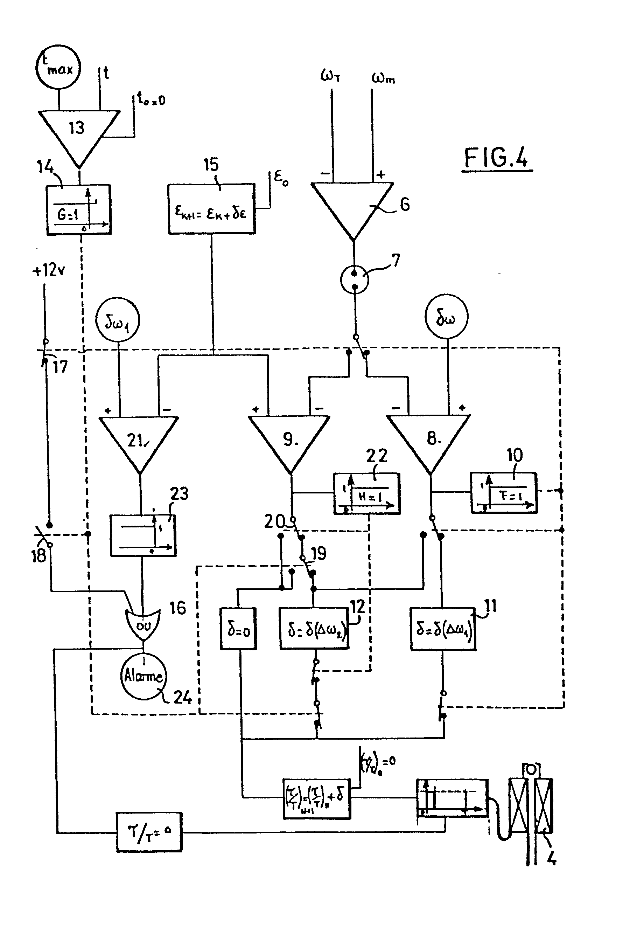

Dans le cadre de l'invention proposée, l'alimentation en huile du vérin 1 est opérée à travers une restriction fixe 2 placée sur la canalisation d'amenée d'huile 3, la pression instantanée en aval de la restriction 2 étant contrôlée par un modulateur de pression approprié 4, du type à position de fermeture en l'absence de courant de commande. Le modulatuer de pression peut être avantageusement, mais de manière non limitative, une électrovanne à bille ou à noyau alimentée par un signal périodique à rapport cyclique variable, selon un procédé connu en soi. La commande de variation du rapport cyclique synthétisée par un boîtier électronique 5, dont le schéma de principe correspond à la fig. 4, permet de moduler la pression d'alimentation du vérin 1 selon la caractéristique donnée par la fig. 3. Le boîtier 5 reçoit:

- l'ordre E émanant du conducteur, de mise en service du dispositif de débrayage à l'arrêt;
- le signal de vitesse moteur $\omega_m$;
- le signal de vitesse turbine $\omega_T$;
- la position $\alpha_c$ de l'organe de réglage du débit de combustible dans le moteur;
- le signal de vitesse du véhicule $V_v$.

Le circuit de comparaison 6 élabore le signal $\Delta\omega = \omega_m - \omega_T$ qui est ensuite échantillonné soit à la cadence f1, soit à la cadence f2 (supérieure ou égale à f1) par l'échantillonneur 7.

Les valeurs discrètes de $\Delta\omega$ ainsi obtenues sont envoyées soit sur le circuit de comparaison 8, soit sur le circuit de comparaison 9, selon que la grandeur logique F, définie plus loin, vaut 0 ou 1.

Le circuit de comparaison 8 élabore le signal $\Delta\omega_1 = \delta\omega - \Delta\omega$, où $\delta\omega$ est une valeur de glissement correspondant au point C de la fig. 1, intermédiaire entre les points B et D. Le relais à seuil 10 délivre la variable logique F qui vaut 1 ou 0 selon que $\Delta\omega_1$ est négatif ou positif. Si F = 0, le signal $\Delta\omega_1$ est dirigé sur le générateur de fonction 11 qui élabore une fonction $\delta(\Delta\omega_1)_N$. Cette fonction $\delta(\Delta\omega_1)_N$ sert à corriger le rapport cyclique $\tau/T$ du signal de commande de l'électrovanne modulatrice 4 selon la relation

$$(\tau/T)_{N+1} = (\tau/T)_N + \delta(\Delta\omega_1)_N$$

où N se rapporte à la Nième période d'échantillonnage réalisé à la fréquence f1. On peut, à titre d'exemple non limitartif, prendre:

$$\delta(\Delta\omega_1) = K_1 + K_2\Delta\omega_1$$

ce qui réalise un asservissement à retour constant et proportionnel. Graphiquement, la phase correspondant à F = 0 s'interprète comme l'évolution de la position du vérin entre les points D et C de la fig. 1, qui induit un glissement $\Delta\omega$ compris entre les points R et P de la fig. 2.

Après la première détection de $\delta\omega_1 > 0$, c'est-à-dire F = 1, le signal est dirigé sur le circuit de comparaison 9 qui élabore alors un nouveau signal $\Delta\omega_2 = \varepsilon_0 - \Delta\omega$, où $\varepsilon_0$ est la valeur du glissement $\Delta\omega$ au point N de la fig. 2, et la fréquence d'échantillonnage devient $f2 \geq f1$. Si la variable logique G, qui sera définie ultérieurement, a la valeur 0, le signal $\Delta\omega_2$ est dirigé sur le générateur de fonction 12 tant que $\Delta\omega_2 < 0$, la valeur 0 étant attachée à une nouvelle variable logique H représentant l'état du relais à seuil 22 si $\Delta\omega_2 < 0$, et la valeur 1, si $\Delta\omega_2 > 0$. Tant que H conserve la valeur 0, c'est-à-dire si $\Delta\omega$ est supérieur à $\varepsilon_0$, le générateur 12 élabore une fonction $\delta'(\Delta\omega_2)_K$ qui sert à corriger le rapport cyclique $\tau/T$ du signal de commande de l'électrovanne modulatrice 4 selon la relation:

$$(\tau/T)_{K+1} = (\tau/T)_K + \delta'(\Delta\omega_2)_K$$

où K se rapporte à la Kième période d'échantillonnage réalisé à la fréquence f2.

On peut, à titre d'exemple non limitatif, prendre:

$$\delta'(\Delta\omega_2) = K'_1 + K'_2\Delta\omega_2,$$

ce qui réalise un asservissement à retour constant et proportionnel. On choisit $K'_1 < K_1$, $K'_2 < K_2$, ce qui correspond à une phase d'approche fine.

Par contre, dès que H = 1, c'est-à-dire si $\Delta\omega$ devient inférieur à $\varepsilon_0$, la correction $\delta'$ du rapport cyclique est prise égale à zéro grâce au contact 20 (à gauche quand H = 1) et le temps t défini au § suivant est remis à zéro; la pression dans le vérin est ainsi maintenue constante et le vérin est immobilisé aux environs du point B.

A l'instant de la mise en service du dispositif de débrayage à l'arrêt, on commence à compter le temps écoulé t. Si, au bout d'un temps fixé à l'avance $t_{max}$, on n'a pas atteint l'état de fonctionnement caractérisé par la valeur 1 de la variable logique H, le signal $t_{max} - t$ élaboré par le circuit de comparaison 13 fait basculer le relais à seuil 14 qui correspond à la variable logique G telle que:

$$G = 1 \text{ si } t > t_{max}$$
$$G = 0 \text{ si } t < t_{max}$$

Si l'on a simultanément G = 1 et F = 0 (vérin positionné entre les points C et D de la fig. 1 et $t > t_{max}$), un voyant d'alarme 24 est mis sous tension à travers les contacts 17 (fermé si F = 0) et 18 (fermé si G = 1) et le circuit OU 16.

Par mesure de sécurité, on peut optionnellement prendre alors $\tau/T = 0$, de manière à éviter un glissement sous couple non négligeable de l'organe d'entrée de la transmission.

Si l'on a simultanément G = 1, F = 1 et H = 0 (vérin positionné entre les points B et C de la fig. 1 et $t > t_{max}$ la correction $\delta$ du rapport cyclique est prise égale à zéro grâce au contact 19 (à gauche quand G = 1): la pression dans le vérin est ainsi maintenue constante et le vérin est immobilisé. Le générateur de fonction 15, initialisé à la valeur $\varepsilon = \varepsilon_0$ correspondant à la valeur du glissement $\Delta\omega$ au point N de la fig. 2, délivre alors une valeur $\varepsilon$ incrémentée de $\delta\varepsilon$ à chaque échantillonnage: la nouvelle valeur de $\varepsilon$ est alors comparée à chaque cycle à une valeur limite $\delta\omega_1$ intermédiaire entre $\varepsilon_0$ et $\delta\omega$ au moyen du circuit de comparaison 21 et du relais à seuil 23.

Si $\delta\omega_1-\varepsilon$ devient négatif avant que H = 1 (c'est-à-dire avant que $\varepsilon-\Delta\omega$ ne devienne positif), le voyant 24 est mis sous tension et optionnellement on peut prendre alors $\tau/T = 0$ de manière à éviter un glissement sous couple non négligeable de l'organe d'entrée. Si H = 1 survient en premier, l'incrémentation de 15 est stopée et le temps t est remis à zéro.

Les deux séquences-types qui peuvent se présenter sont les suivantes:
- Passage Neutre/Automatique à l'arrêt: cette séquence correspond au remplissage sous pression modulée du vérin 1.

Initialement, le point de fonctionnement est le point M de la fig. 2. On a donc H = 1, et $\tau/T = 0$: on remplit donc le vérin sous pleine pression jusqu'à ce que l'on atteigne le point N d'accostage des garnitures de friction. Après dépassement du point N, l'électrovanne modulatrice s'ouvre de plus en plus, le remplissage s'effectuant alors sous une pression décroissante. Selon les réglages adoptés, la course du vérin peut ou non dépasser le point C de la fig. 1 (correspondant au glissement $\delta\omega$), puis le vérin revient en arrière pour se stabiliser aux environs du point B de la fig. 1 (correspond à la valeur $\varepsilon_0$ du glissement) si les conditions mécaniques de fonctionnement du vérin sont normales. Si, pour une raison quelconque, le couple de trainée au point B est supérieur à la normale et entraîne un glissement supérieur à la valeur nominale $\varepsilon_0$, le fonctionnement en débrayage à l'arrêt est cependant autorisé tant que le glissement à l'accostage n'excède pas la valeur limite $\delta\omega_1$.

Dans le cas contraire, on signale une anomalie et l'on peut optionnellement supprimer le débrayage à l'arrêt en ramenant $\tau/T$ à zéro.
- Débrayage de la transmission en fin de décélération du véhicule: cette séquence correspond à la vidange partielle du vérin 1 avec contrôle de la pression au moyen de l'électrovanne modulante. Le point de fonctionnement à l'initialisation de la séquence, est le point D de la fig. 1. La vidange du vérin 1 s'opère à travers l'électrovanne 4 qui s'ouvre de plus en plus et, à partir du point E de la fig. 1, l'organe d'entrée de la transmission commence à glisser.

En raison du choix des coefficients $K_1$ et $K'_1$, $K_2$ et $K'_2$, la chute de pression dans le vérin 1 est rapide de D en C, plus lente et à pas d'incrémentation faible de C en B. Si les conditions mécaniques de fonctionnement du vérin sont normales, ce dernier se stabilise en position aux environs du point B, sinon, on tolère un fonctionnement légèrement dégradé correspondant à un glissement maximal $\delta\omega_1$, ou même , on supprime le débrayage à l'arrêt en signalant une anomalie, de la même manière que dans la séquence décrite précédemment.

Si la demande de débrayage à l'arrêt cesse, soit que le signal E disparaisse (ordre émanant du conducteur) soit que $\alpha_c \neq 0$ (le conducteur réaccélère pour redémarrer), on prend alors $\tau/T = 0$ et l'électrovanne modulante 4 se ferme: le vérin 1 se remplit ainsi sous l'effet de la pleine pression de ligne. Si l'on désire dans cette circonstance améliorer la progressivité de la prise de couple, on peut optionnellement prévoir une loi progressive de retour à zéro de $\tau/T$ à partir de sa valeur au moment de la disparition de la demande de débrayage à l'arrêt.

## Revendications

1. Commande de la pression d'alimentation d'un récepteur hydraulique (1) qui, du fait de son alimentation, permet de transmettrre un couple aux roues, et qui comprend un modulatuer de pression (4) du type fermé par défaut de courant associé à un ensemble de commandes (5) caractérisé en ce que:
- l'ensemble de commandes (5) peut être autorisé à fonctionner par un moyen extérieur (E) et reçoit les informations vitesse moteur $\omega_m$, vitesse turbine $\omega_T$, charge moteur $\alpha_c$ et vitesse véhicule $V_v$,
- la mesure d'un glissement $\Delta\omega = \omega_m-\omega_T$ est utilisée pour synthétiser le singal de commande du modulateur (4) de façon à positionner le vérin du récepteur hydraulique aux environs immédiats de la course d'accostage des garnitures; ce pilotage de la pression n'étant possible que lorsque les grandeurs $\alpha_c$ et $V_v$ sont simultanément inférieures à des seuils respectifs de valeurs préétablies.

2. Commande de la pression d'alimentation d'un récepteur hydraulique (1) selon la revendication 1, caractérisée en ce que le glissement $\Delta\omega$ est comparé séquentiellement à deux valeurs de seuil, $\delta\omega$ et $\varepsilon$:

- si $\Delta\omega_1 = \delta\omega-\Delta\omega$ est négatif, il y a génération d'un signal de correction à grand gain $\delta = \delta(\Delta\omega_1)$, modifiant le signal de commande du modulateur de pression;

- si $\Delta\omega_1 = \delta\omega-\Delta\omega$ est positif, il y a comparaison avec une deuxième valeur de seuil $\varepsilon$ inférieure à $\delta\omega$, et génération d'un signal de correction à petit gain $\delta = \delta(\Delta\omega_2)$, où $\Delta\omega_2 = \varepsilon-\Delta\omega$;
- $\Delta\omega<\varepsilon$, le signal de correction $\delta$ est pris égal à 0; le signal de correction $\delta$ agit sur un dispositif d'incrémentation du signal de commande du modulateur de pression.

3. Commande de la pression d'alimentation d'un récepteur hydraulique (1) selon les revendications 1 et 2, caractérisée en ce que le temps d'activation du dispositif selon l'invention est compté et comparé à une valeur de seuil de temps prédéterminée $t_{max}$; quand le temps écoulé dépasse $t_{max}$:

- si le premier seuil n'est pas franchi, c'est-à-dire si $\Delta\omega>\delta\omega$, il y a déclenchement d'un signal d'alarme et réalimentation à la pleine pression du récepteur hydraulique (1);
- si le glissement $\Delta\omega$ est compris entre le premier et le deuxième seuil, c'est-à-dire si $\varepsilon<\Delta\omega<\delta\omega$, le dispositif selon l'invention arrête l'incrémentation du signal de commande du modulateur et incrémente le deuxième seuil jusqu'à une valeur de troisième seuil $\delta\omega_1$ intermédiaire entre le premier et le deuxième seuil;

- si le glissement $\Delta\omega > \delta\omega_1$, il y a déclenchement d'un signal d'alarme et réalimentation à la pleine pression du récepteur hydraulique (1);
- si le glissement $\Delta\omega < \delta\omega_1$, cette valeur du glissement devient le nouveau deuxième seuil, et le temps t est réinitialisé à zéro.

4. Commande de la pression d'alimentation d'un récepteur hydraulique (1) selon l'une quelconque des revendications 1 à 3, caractérisée en ce que, à la disparition de l'ordre de débrayage à l'arrêt, le retour à la pleine pression d'alimentation s'effectue selon une loi prédéterminée en fonction du temps.

**Patentansprüche**

1. Steuerung des Flüssigkeitsdrucks in einer hydraulischen Vorrichtung (1), die aufgrund ihrer Flüssigkeitsversorgung ein Drehmoment auf Räder übertragen kann und die einen Druckmodulator (4) aufweist, der bei Stromabwesenheit geschlossen ist und einer Steuerung (5) zugeordnet ist, dadurch gekennzeichnet, dass
- die Steueranordnung (5) in die Lage versetzt werden kann, durch einen äusseren Einfluss (E) in Betrieb genommen zu werden und Informationen erhält über die Motorgeschwindigkeit ($\omega_m$), die Turbinengeschwindigkeit ($\omega_t$), Motorlast ($\delta_c$) und Fahrzeuggeschwindigkeit ($V_v$),
- eine Gleitmessung ($\Delta\omega = \omega_m - \omega_t$) verwendet wird, um ein Steuersignal für den Modulator (4) zu erzeugen, so dass der Kolben der hydraulischen Vorrichtung in die unmittelbare Nähe des Kraftschlussweges der Beläge gebracht wird; diese Drucksteuerung ist nur möglich, wenn die Grössen $\alpha_c$ und $V_v$ zugleich kleiner als vorgegebene zugehörige Schwellwerte sind.

2. Steuerung des Flüssigkeitsdrucks in einer hydraulischen Vorrichtung (1) nach Anspruch 1, dadurch gekennzeichnet, dass das Gleiten ($\Delta\omega$) sequentiell mit zwei Schwellwerten ($\delta\omega$ und $\varepsilon$) verglichen wird:

- wenn $\Delta\omega_1 = \delta\omega - \Delta\omega$ negativ ist, wird ein Korrektursignal mit grosser Verstärkung $\delta = \delta(\Delta\omega_1)$ erzeugt, das das Steuersignal des Druckmodulators modifiziert;
- wenn $\Delta\omega_1 = \delta\omega - \Delta\omega$ positiv ist, wird ein Vergleich mit einem zweiten Schwellwert $\varepsilon$ durchgeführt, der kleiner als $\delta\omega$ ist und ein Korrektursignal mit kleiner Verstärkung erzeugt $\delta = \delta(\Delta\omega_2)$, wobei $\Delta\omega_2 = \varepsilon - \Delta\omega$ ist;
- wenn $\Delta\omega < \varepsilon$ ist, wird das Korrektursignal $\delta =$ Null gewählt; das Korrektursignal $\delta$ wirkt auf eine Zuwachsanordnung des Steuersignals des Druckmodulators.

3. Steuerung des Flüssigkeitsdrucks in einer hydraulischen Vorrichtung (1) nach Anspruch 1 und 2, dadurch gekennzeichnet, dass die Aktivierungszeit der erfindungsgemässen Vorrichtung gezählt wird und mit einem vorgegebenen Schwellwert der Zeit $t_{max}$ verglichen wird; wenn die abgelaufene Zeit $t_{max}$ überschreitet:

- und die erste Schwelle nicht überschritten ist, d.h. wenn $\Delta\omega > \delta\omega$ ist, wird ein Alarmsignal ausgelöst und die hydraulische Vorrichtung (1) mit dem vollen Druck versorgt;
- sofern das Gleiten $\Delta\omega$ zwischen dem ersten und dem zweiten Schwellwert liegt, d.h. wenn $\varepsilon < \Delta\omega < \delta\omega$ ist, unterbricht die erfindungsgemässe Anordnung den Zuwachs des Steuersignals des Modulators und lässt den zweiten Schwellwert zunehmen bis zu einem Wert des dritten Schwellwertes $\delta\omega_1$, der zwischen dem ersten und dem zweiten Schwellwert liegt;
- sofern das Gleiten $\Delta\omega > \delta\omega_1$ ist, wird ein Alarmsignal ausgelöst und die hydraulische Vorrichtung (1) mit dem vollen Druck versorgt;
- sofern das Gleiten $\Delta\omega < \delta\omega_1$ ist, wird dieser Gleitwert der neue zweite Schwellwert und die Zeit t auf Null gestellt.

4. Steuerung des Flüssigkeitsdrucks in einer hydraulischen Vorrichtung (1) nach einem der Ansprüche 1 bis 3, dadurch gekennzeichnet, dass beim Verschwinden des Auskuppelvorganges beim Anhalten die Rückkehr zum vollen Flüssigkeitsdruck gemäss einem vorgegebenen Gesetz als Funktion der Zeit erfolgt.

**Claims**

1. Control of the feed pressure of a hydraulic receiver (1) which, by virtue of its feed, permits a torque to be transmitted to the wheels and which comprises a pressure modulator (4) of the type which is closed by absence of current associated with a control assembly (5) characterised in that:
- the control assembly (5) can be authorised to operate by an external means (E) and receives information in respect of engine speed $\omega_m$, turbine speed $\omega_T$, engine load $\alpha_c$ and vehicle speed $V_v$,
- the measurement of a slip $\Delta\omega = \omega_m - \omega_T$ is used to synthesise the control signal for the modulator (4) in such a way as to position the jack of the hydraulic receiver in the immediate vicinity of the contact travel of the linings; said pilot control in respect of the pressure being possible only when the parameters $\alpha_c$ and $V_v$ are simultaneously lower than respective thresholds of predetermined values.

2. Control of the feed pressure of a hydraulic receiver (1) according to claim 1 characterised in that the slip $\Delta\omega$ is sequentially compared to two threshold values, $\delta\omega$ and $\varepsilon$:

- if $\Delta\omega_1 = \delta\omega - \Delta\omega$ is negative, there is generation of a high-gain correction signal $\delta = \delta(\Delta\omega_1)$, modifying the pressure modulator control signal;
- if $\Delta\omega_1 = \delta\omega - \Delta\omega$ is positive, there is comparison with a second threshold value $\varepsilon$ lower than $\delta\omega$, and generation of a low-gain correction signal $\delta = \delta(\Delta\omega_2)$ in which $\Delta\omega_2 = \varepsilon - \Delta\omega$;
- if $\Delta\omega < \varepsilon$ the correction signal $\delta$ is taken as be-

ing equal to 0; the correction signal $\delta$ acts on a means for incrementing the pressure modulator control signal.

3. Control of the feed pressure of a hydraulic receiver (1) according to claims 1 and 2 characterised in that the time of activation of the arrangement according to the invention is counted and compared to a predetermined time threshold value $t_{max}$, when the elapsed time exceeds $t_{max}$:

– if the first threshold is not passed, that is to say if $\Delta\omega>\delta\omega$ an alarm signal is triggered and the hydraulic receiver (1) is fed again at full pressure;
– if the slip $\Delta\omega$ is between the first and second thresholds, that is to say if $\varepsilon<\Delta\omega<\delta\omega$, the apparatus according to the invention stops incrementing of the modulator control signal and increments the second threshold to a third threshold value $\delta\omega_1$ which is intermediate between the first and second thresholds;
– if the slip $\Delta\omega>\delta\omega_1$, an alarm signal is triggered and the hydraulic receiver (1) is fed again at full pressure;
– if the slip $\Delta\omega<\delta\omega_1$, said value of the slip becomes the new second threshold and the time t is reset to zero.

4. Control of the feed pressure of a hydraulic receiver (1) according to any one of claims 1 to 3 characterised in that, when the declutching order in the stopped condition vanishes, return to the full feed pressure occurs in accordance with a predetermined law in dependence on time.

0 120 779

FIG.1

FIG.2

FIG.3

FIG.5

FIG.4

0 120 779